Europäisches Patentamt

**European Patent Office**

**Office européen des brevets**

(11) Veröffentlichungsnummer: **0 023 701**
**A1**

(12) # EUROPÄISCHE PATENTANMELDUNG

(21) Anmeldenummer: **80104491.8**

(22) Anmeldetag: **30.07.80**

(51) Int. Cl.³: **C 08 J 5/18**, B 32 B 27/30

(30) Priorität: **04.08.79 DE 2931706**

(43) Veröffentlichungstag der Anmeldung: **11.02.81**
**Patentblatt 81/6**

(84) Benannte Vertragsstaaten: **AT BE CH DE FR GB IT LI LU NL SE**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Zimmermann, Wolfgang, Dr., Im Stückes 48, D-6233 Kelkheim (Taunus) (DE)**
Erfinder: **Harréus, Albrecht, Dr., Philipp-Kremer-Strasse 16, D-6233 Kelkheim (Taunus) (DE)**

(54) **Folienverbund, Verfahren zu seiner Herstellung, seine Verwendung und daraus bestehendes Verpackungsmaterial.**

㊗ Eine Folie aus einem thermoplastischen Kunststoff kann mit einem anderen Kunststoff beschichtet werden und ergibt ein Folienverbund. Die Beschichtung kann einseitig oder beidseitig erfolgen. Ein Folienverbund, der aus einer Trägerfolie aus Polyvinylalkohol und einer Beschichtung aus Polyvinylacetal besteht, eignet sich insbesondere zur Verwendung als Verpackungsmaterial. Die Beschichtung wird mit Vorteil durch Auftragen einer Polyvinylacetal-Lösung auf die Trägerfolie und anschließendes Entfernen des Lösungsmittels erzielt. Als Beschichtungsmittel ist Polyvinylbutyral besonders geeignet.

ACTORUM AG

Folienverbund, Verfahren zu seiner Herstellung, seine
Verwendung und daraus bestehendes Verpackungsmaterial

Die Erfindung bezieht sich auf einen Folienverbund aus einer beschichteten Trägerfolie, ein Verfahren zur Herstellung dieses Folienverbundes, seine Verwendung als Verpackungsmaterial und das aus dem Folienverbund bestehende Verpackungsmaterial.

Es ist bekannt, daß thermoplastische Kunststoffe zu Folien verarbeitet werden können; auch die Lackierung und Beschichtung von Folien ist bekannt. Verbundfolien aus Zellglas und Polyethylenfolie sowie aus Polyethylenfolie und Polyterephthalsäureglykolester sind ebenfalls beschrieben (vgl. G. Schulz, Die Kunststoffe; Carl Hanser Verlag 2. Auflage 1964, Seite 511). Ferner ist bekannt, daß Leichtmetallfolien mit weichmacherfreien Polyvinylbutyralen lackiert werden können (vgl. Kunststoffe 41 (1951), Seite 431).

Aufgabe der Erfindung ist die Schaffung eines Folienverbundes auf der Grundlage einer Trägerfolie aus einem thermoplastischen Kunststoff, die mit einem anderen thermoplastischen Kunststoff beschichtet ist; der Folienverbund soll wasserfest und möglichst gasundurchlässig und das Beschichtungsmaterial soll physiologisch unbedenklich sein.

Die Erfindung betrifft nun einen Folienverbund, der aus einer mit einem thermoplastischen Kunststoff beschichteten Trägerfolie besteht, und ist dadurch gekennzeichnet, daß die Trägerfolie aus Polyvinylalkohol besteht und einseitig oder beidseitig mit einem Polyvinylacetal beschichtet ist.

Die Erfindung betrifft ferner ein Verfahren zur Herstellung eines Folienverbundes durch Beschichten einer Trägerfolie mit einem thermoplastischen Kunststoff, das dadurch gekennzeichnet ist, daß eine Trägerfolie aus Polyvinylalkohol einseitig oder beidseitig unter üblichen Bedingungen mit einem Polyvinylacetal beschichtet wird.

0023701

Obwohl die Haftfestigkeit von Folien aus Polyvinylalkohol (PVAL) mit anderen Kunststoffen bekanntlich gering ist (vgl. G. Schulz, Die Kunststoffe; Carl Hanser Verlag, 2. Auflage 1964, Seite 513), zeigt die erfindungsgemäße Beschichtung überraschenderweise eine ausgezeichnete Adhäsion zur Oberfläche der Trägerfolie aus Polyvinylalkohol. Ferner bildet das Beschichtungsmaterial - auch in dünner Schicht - Filme mit sehr guter Kohäsion und ist physiologisch unbedenklich.

Der erfindungsgemäß verwendete PVAL wird in bekannter Weise hergestellt durch Verseifung, vorzugsweise durch Alkoholyse, von Polyvinylestern, vorzugsweise Polyvinylacetat (vgl. z.B. deutsche Patentschrift 17 20 709 = britische Patentschrift 11 68 757). Die 4gewichtsprozentige wäßrige Lösung des PVAL weist eine Viskosität von 4 bis 70 mPa·s, vorzugsweise 10 bis 60 mPa·s auf (gemessen bei einer Temperatur von 20°C). Die Esterzahl des PVAL liegt im Bereich von 10 bis 250 mg KOH/g, vorzugsweise 20 bis 200 mg KOH/g.

Der PVAL soll thermoplastisch verarbeitbar sein und enthält deshalb üblicherweise einen Weichmacher. Als Weichmacher eignen sich vor allem mehrwertige aliphatische Alkohole mit Siedepunkten oberhalb 250°C, insbesondere zweiwertige bis sechswertige Alkohole mit 2 bis 6 Kohlenstoffatomen; zwei- oder dreiwertige Alkanole werden bevorzugt eingesetzt. Als Beispiele seien genannt Ethylenglykol, Glycerin, Trimethylolpropan, Neopentylglykol und Sorbit. Anstelle eines einzigen Weichmachers kann auch ein Gemisch verschiedener Weichmacher verwendet werden. Die Menge des einzusetzenden Weichmachers beträgt 5 bis 50, vorzugsweise 10 bis 30 Gewichtsprozent (bezogen auf den PVAL).

Besonders gut geeignet ist ein PVAL in Granulat-Form, wobei das Granulat zu mindestens 70 Gewichtsprozent, vorzugsweise mindestens 90 Gewichtsprozent, aus Partikeln mit einem Durchmesser von 0,8 bis 4 mm, vorzugsweise 1 bis
3,5 mm, besteht, in denen ein Weichmacher homogen verteilt vorliegt. Dieses weichmacherhaltige PVAL-Granulat wird
z.B. dadurch hergestellt, daß 100 Gewichtsteile eines trockenen
Polyvinylalkohol-Granulats, das zu mindestens 70 Gewichtsprozent aus Partikeln mit einem Durchmesser von 0,4 bis
4 mm besteht, und 5 bis 50 Gewichtsteile eines Weichmachers
in Gegenwart einer solchen Menge Wasser, die unter Normalbedingungen zur Lösung des Polyvinylalkohols nicht ausreicht, intensiv und homogen miteinander vermischt werden
und die Temperatur des Gemisches während des Mischvorgangs
derart erhöht und wieder gesenkt wird, daß die Polyvinylalkohol-Partikel quellen und vorübergehend agglomerieren.
Dabei wird die Temperatur des Gemisches, ausgehend von
Raumtemperatur, kontinuierlich zunächst bis zu einem Maximum erhöht und dann wieder gesenkt, wobei sich während der
Temperatursteigerung lockere PVAL-Agglomerate bilden, die
nach Erreichen des Temperaturmaximums leicht wieder zerfallen. Das Temperaturmaximum übersteigt 140°C nicht und
liegt vorzugsweise im Bereich von 100 bis 130°C; in der
Abkühlungsphase wird die Temperatur auf 40 bis 70°C und
vorzugsweise auf 35 bis 60°C gesenkt. Die Temperaturerhöhung und die Temperaturerniedrigung werden vorzugsweise
in etwa gleichen Zeiträumen durchgeführt. Die benötigte
Menge Wasser beträgt - je nach Art des verwendeten PVAL -
2 bis 40 Gewichtsprozent, vorzugsweise 4 bis 30 Gewichtsprozent (bezogen auf den PVAL). Eine Entfernung des nach
Beendigung des Mischvorgangs noch vorhandenen Wassers ist
nicht erforderlich. Für den gesamten Mischvorgang wird -
je nach Art und Menge der Mischkomponenten und der Art
der Mischvorrichtung - ein Zeitraum von 10 Minuten bis 3
Stunden benötigt. Während des Vermischens der trockenen
PVAL-Partikel mit dem flüssigen Weichmacher/Wasser-Gemisch
quellen die Partikel, wodurch die Diffusion des Weichmachers in das Partikelinnere erleichtert wird.

0023701

Die PVAL-Trägerfolien werden nach üblichen Verfahren hergestellt, z.B. durch Kalandrieren, durch Extrudieren mit einer Breitschlitzdüse, durch Gießen und vorzugsweise durch Extrusionsblasen. Die Beschichtung der Trägerfolien mit einem Polyvinylacetal erfolgt ebenfalls in bekannter Weise, und zwar je nach vorgesehenem Verwendungszweck einseitig oder beidseitig. Die einseitige Beschichtung wird beispielsweise durch Aufspritzen, Auftragen mit Hilfe einer Walze oder durch Streichen mit einem Rakelmesser durchgeführt. Die beidseitige Beschichtung wird z.B. durch Tauchen oder beidseitiges Aufspritzen, Streichen oder anderweitiges Auftragen erzielt. Die ein- oder beiseitige Beschichtung der Trägerfolie erfolgt vorzugsweise durch Bedruckung mittels eines Vollflächendrucks, z.B. Vollflächenflexodruck oder Vollflächendruck über Tiefdruckzylinder.

Die Trägerfolie hat zweckmäßigerweise eine Stärke von 10 bis 300 µm, vorzugsweise 20 bis 100 µm. Die Stärke der Beschichtung beträgt 1 bis 10 µm, vorzugsweise 3 bis 6 µm. Die Sauerstoffpermeabilität der Trägerfolie soll weniger als $10 \text{ cm}^3/\text{m}^2 \cdot 24 \text{ h} \cdot \text{bar}$, vorzugsweise weniger als $6 \text{ cm}^3/\text{m}^2 \cdot 24 \text{ h} \cdot \text{bar}$, betragen.

Als Beschichtungsmittel für die PVAL-Trägerfolie wird erfindungsgemäß ein Polyvinylacetal verwendet. Dieses ist in bekannter Weise durch Acetalisieren von Polyvinylalkohol mit einem niederen aliphatischen Aldehyd, z.B. Formaldehyd, Acetaldehyd, Propionaldehyd und vorzugsweise Butyraldehyd, herstellbar. Das Polyvinylacetal wird beispielsweise hergestellt durch Kondensation eines Polyvinylalkohols mit einem Aldehyd in wäßriger Phase in Anwesenheit eines sauren Katalysators, wobei das Reaktionsgemisch zunächst bei einer Temperatur von höchstens 20°C gehalten wird, damit das Reaktionsprodukt ausfällt, und die Reaktion dann bei einer Temperatur von mindestens 30°C vervollständigt wird (vgl. deutsche Offenlegungsschrift 23 65 005).

0023701

Ein besonders gut geeignetes Beschichtungsmittel ist Polyvinylbutyral. Dieses ist vorzugsweise aus 65 bis 85 Gewichtsprozent Vinylbutyraleinheiten, 1 bis 6 Gewichtsprozent Vinylacetateinheiten und 15 bis 30 Gewichtsprozent
Vinylalkoholeinheiten zusammengesetzt. Die Viskosität einer
5gewichtsprozentigen methanolischen Lösung des Polyvinylbutyrals beträgt vorzugsweise 5 bis 200 mPa·s und insbesondere 60 bis 120 mPa·s (gemessen nach DIN 53015 im Höppler-Viskosimeter bei einer Temperatur von 20°C).

Es ist zweckmäßig, das Beschichtungsmittel in Form einer
Lösung auf die Trägerfolie aufzutragen. Die Lösung enthält
1 bis 15 Gewichtsprozent, vorzugsweise 2 bis 8 Gewichtsprozent, des Beschichtungsmittels. Als Lösungsmittel dienen
hierbei organische Lösungsmittel mit Siedepunkten von 50
bis 150°C, vorzugsweise von 55 bis 125°C. Bevorzugt werden
aliphatische Alkohole mit 1 bis 4 Kohlenstoffatomen, z.B.
Methanol, Ethanol, Propanol, Isopropanol, n-Butanol und
Isobutanol, ferner Glykolether, deren Alkoholkomponente
1 bis 3 Kohlenstoffatome aufweist, z.B. Ethylenglykolmonomethylether, Ethylenglykolmonoethylether und Ethylenglykolmonopropylether, sowie Essigsäureester, deren Alkoholkomponente 1 bis 4 Kohlenstoffatome aufweist, z.B. Methylacetat, Ethylacetat und n-Butylacetat. Von Vorteil ist der
Einsatz eines Lösungsmittelgemisches aus mindestens einer
niedrig siedenden und mindestens einer hochsiedenden
Komponente innerhalb des vorgenannten Temperaturbereichs.
Das Lösungsmittel wird nach der Beschichtung durch Verdampfen entfernt; der Lösungsmitteldampf wird dann kondensiert, und das Lösungsmittel wird in üblicher Weise regeneriert.

Zur Modifizierung der Eigenschaften der Beschichtung wird
das Beschichtungsmittel gegebenenfalls in Kombination mit
Zusatzstoffen wie Pigmenten, z.B. Kaolin oder Kreide,
löslichen Farbstoffen, z.B. Methylenblau, und/oder physiologisch unbedenklichen Weichmachern, z.B. geblasenes Rizinusöl, eingesetzt.

0023701

Der erfindungsgemäße Folienverbund ist fast völlig gasundurchlässig und wasserfest. Seine Sauerstoffpermeabilität liegt im Bereich von 0,4 bis 5,0 $cm^3/m^2 \cdot 24h \cdot bar$, vorzugs-weise von 0,7 bis 3,0 $cm^3/m^2 \cdot 24h \cdot bar$ (gemessen nach DIN 53380). Der Folienverbund kann ohne Schwierigkeit durch Tiefziehen verformt werden und ist gut verschweißbar.

Der Folienverbund eignet sich vor allem als Verpackungsmaterial, insbesondere für die aroma- und sauerstoffdichte Verpackung von Lebensmitteln, Genußmitteln und Kosmetikmitteln. Er ist außerdem geeignet als Material zur Herstellung von luftdicht schließenden Beuteln, die beispielsweise zur zeitweiligen Aufbewahrung von Urin oder Fäkalien dienen.

Die folgenden Beispiele erläutern die Erfindung; Prozentangaben beziehen sich dabei auf das Gewicht.

0023701

## Beispiel 1

Aus einem Polyvinylalkohol, dessen 4%-Lösung eine Viskosität von 18 mPa·s aufweist, der eine Esterzahl von 140 mgKOH/g hat und als Weichmacher 15 % Glycerin enthält, wird durch Extrusionsblasen eine wasserlösliche Folie mit einer Stärke von 30 μm hergestellt. Diese Folie wird auf einen 1 m x 1 m großen Rahmen gespannt und mittels einer Spritzpistole auf beiden Seiten mit einem Polyvinylbutyral-Lack gleichmäßig beschichtet. Der Lack besteht aus einer Lösung von 150 g eines Polyvinylbutyrals, das aus 76 % Vinylbutyraleinheiten, 3 % Vinylacetateinheiten und 21 % Vinylalkoholeinheiten besteht und dessen 5%-Lösung eine Viskosität von 72 mPa·s zeigt, in einem Lösemittelgemisch aus 450 g Ethanol, 1725 g Methanol und 5175 g Methylacetat sowie 2 g Methylenblau als Indikator für die Gleichmäßigkeit der Beschichtung. Nach 20minütiger Trocknung bei 30°C resultiert ein Folienverbund mit einer Gesamtstärke von 40 μm; die Stärke der Polyvinylbutyral-Schichten beträgt demnach jeweils 5 μm. Der Folienverbund ist auf beiden Seiten wasserbeständig und heißsiegelfähig. Seine Sauerstoffpermeabilität beträgt 0,9 $cm^3/m^2 \cdot 24h \cdot bar$.

## Beispiel 2

Eine nach Beispiel 1 hergestellte Polyvinylalkohol-Folie wird auf einer Jagenberg-Beschichtungsmaschine mit dem in Beispiel 1 beschriebenen Polyvinylbutyral-Lack einseitig gleichmäßig beschichtet. Nach 8minütiger Trocknung bei 45°C resultiert ein Folienverbund mit einer Gesamtstärke von 33 μm, d.h. die Stärke der Polyvinylbutyral-Schicht beträgt 3 μm. Der Folienverbund ist auf der beschichteten Seite wasserfest und gut verschweißbar. Seine Sauerstoffpermeabilität beträgt 1,0 $cm^3/m^2 \cdot 24h \cdot bar$.

Beispiel 3

Eine nach Beispiel 1 hergestellte Polyvinylalkohol-Folie wird mittels einer Spritzpistole einseitig mit einem Polyvinylbutyral-Lack gleichmäßig beschichtet. Der hier verwendete Lack entspricht dem in Beispiel 1 beschriebenen Lack, enthält jedoch zusätzlich noch eine homogenisierte Aufschlämmung von 19 g Kaolin-Pulver in 5 g Methanol und 14 g Methylacetat. Nach 20minütiger Trocknung bei 30°C resultiert ein Folienverbund mit einer Gesamtstärke von 35 µm; die Stärke der Lackschicht beträgt demnach 5 µm. Der Folienverbund ist auf der beschichteten Seite wasserfest und gut verschweißbar. In kaltem Wasser löst sich die Trägerfolie im Laufe von 8 min vollständig auf.

Beispiel 4

Aus dem in Beispiel 1 beschriebenen Polyvinylalkohol wird im Gießverfahren eine Folie mit einer Stärke von 25 µm hergestellt. Diese Folie wird im Flexodruckverfahren auf beiden Seiten mit einem Polyvinylbutyral-Lack gleichmäßig beschichtet. Der Lack besteht aus einer Lösung von 200 g eines Polyvinylbutyrals, das aus 70 % Vinylbutyraleinheiten, 3 % Vinylacetateinheiten und 27 % Vinylalkoholeinheiten besteht und dessen 5-%-Lösung eine Viskosität von 18 mPa·s zeigt, in einem Lösemittelgemisch aus 100 g n- Butanol, 25 g Methanol und 75 g Methylacetat. Nach 4minütiger Trocknung bei 45°C resultiert ein Folienverbund mit einer Gesamtstärke von 35 µm, d.h. die Stärke der Polyvinylbutyral-Schicht beträgt jeweils 5µm. Der Folienverbund ist auf beiden Seiten wasserfest und gut verschweißbar; er kann durch Tiefziehen ohne Schwierigkeiten verformt werden. Seine Sauerstoffpermeabilität beträgt 0,9 $cm^3/m^2 \cdot 24h \cdot bar$.

Patentansprüche:

1. Folienverbund, bestehend aus einer mit einem thermoplastischen Kunststoff beschichteten Trägerfolie, dadurch gekennzeichnet, daß die Trägerfolie aus Polyvinylalkohol besteht und einseitig oder beidseitig mit einem Polyvinylacetal beschichtet ist.

2. Folienverbund nach Anspruch 1, dadurch gekennzeichnet, daß die Schichtstärke des Polyvinylacetals 1 bis 10 µm beträgt.

3. Folienverbund nach Anspruch 1, dadurch gekennzeichnet, daß das Polyvinylacetal ein Polyvinylbutyral ist.

4. Folienverbund nach Anspruch 3, dadurch gekennzeichnet, daß das Polyvinylbutyral aus 65 bis 85 Gewichtsprozent Vinylbutyraleinheiten, 1 bis 6 Gewichtsprozent Vinylaceteinheiten und 15 bis 30 Gewichtsprozent Vinylalkoholeinheiten zusammengesetzt ist.

5. Folienverbund nach Anspruch 3, dadurch gekennzeichnet, daß das Polyvinylbutyral in 5gewichtsprozentiger Lösung in Methanol bei einer Temperatur von 20°C eine Viskosität von 5 bis 200 mPa·s aufweist.

6. Verfahren zur Herstellung eines Folienverbundes durch Beschichten einer Trägerfolie mit einem thermoplastischen Kunststoff, dadurch gekennzeichnet, daß eine Trägerfolie aus Polyvinylalkohol einseitig oder beidseitig unter üblichen Bedingungen mit einem Polyvinylacetal beschichtet wird.

7. Verfahren nach Anspruch 6, dadurch gekennzeichnet, daß die Beschichtung durch Auftragen einer Lösung des Polyvinylacetals in einem organischen Lösemittel und anschließendes Entfernen des Lösemittels durchgeführt wird.

8. Verwendung des Folienverbundes nach Anspruch 1 als Verpackungsmaterial.

9. Verpackungsmaterial, bestehend aus einem Folienverbund nach Anspruch 1.

## EUROPÄISCHER RECHERCHENBERICHT

Europäisches
Patentamt

Nummer der Anmeldung
EP 80 10 4491

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 2 374 767</u> (J.A. MITCHELL et al.)<br><br>* Seite 1, linke Spalte, Zeilen 4,5; rechte Spalte, Zeilen 10-18, 37-39; Seite 4, rechte Spalte, Zeilen 23-36 * | 1-3, 6-9 |
| | -- | |
| X | <u>GB - A - 1 045 635</u> (ICI)<br><br>* Seite 2, Zeilen 5-9; Ansprüche Seite 1, Zeilen 20,21 * | 1 |
| | ---- | |

**KLASSIFIKATION DER ANMELDUNG (Int. Cl.³)**

C 08 J   5/18
B 32 B 27/30

**RECHERCHIERTE SACHGEBIETE (Int. Cl.³)**

B 32 B 27/30
C 08 J   5/18

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-11-1980 | VAN GOETHEM |

EPA form 1503.1   06.78